**Europäisches Patentamt**

**European Patent Office**

**Office européen des brevets**

(19)

(11) Veröffentlichungsnummer : **0 055 218**
**B1**

(12) **EUROPÄISCHE PATENTSCHRIFT**

(45) Veröffentlichungstag der Patentschrift :
26.03.86

(51) Int. Cl.⁴ : **C 09 B 41/00**

(21) Anmeldenummer : **81810503.3**

(22) Anmeldetag : **17.12.81**

(54) **Herstellung von Azoverbindungen.**

(30) Priorität : **23.12.80 GB 8041277**

(43) Veröffentlichungstag der Anmeldung :
**30.06.82 Patentblatt 82/26**

(45) Bekanntmachung des Hinweises auf die Patenterteilung : **26.03.86 Patentblatt 86/13**

(84) Benannte Vertragsstaaten :
**CH DE FR GB IT LI**

(56) Entgegenhaltungen :
**DE-A- 2 139 311
DE-A- 2 448 994
FR-A- 2 009 651
FR-A- 2 068 684
FR-A- 2 207 167
FR-A- 2 427 366
US-A- 1 462 613
US-A- 3 678 028
Die Akte enthält technische Angaben, die nach dem Eingang der Anmeldung eingereicht wurden und die nicht in dieser Patentschrift enthalten sind.**

(73) Patentinhaber : **CIBA-GEIGY AG
Klybeckstrasse 141
CH-4002 Basel (CH)**

(72) Erfinder : **Wheeler, Ian Robert
20 Riverside Craigend Houston
Renfrewshire Schottland (GB)**

**Beschreibung**

Vorliegende Erfindung betrifft ein Verfahren zur Herstellung von Azoverbindungen und insbesondere zur Verwendung als Pigmente und Dispersionsfarbstoffe geeigneten Azoverbindungen.

Azopigmente werden üblicherweise in wässrigen Medien hergestellt, indem man ein primäres aromatisches Amin mit einem anorganischen Nitrit in wässriger Mineralsäure behandelt und das so gebildete Diazoniumsalz dann mit einer in Wasser entweder gelösten oder dispergierten Kupplungskomponente umsetzt.

Dieses herkömmliche Verfahren weist jedoch in verschiedener Hinsicht Nachteile auf. Zahlreiche Diazoniumsalze sind in Wasser unbeständig, insbesondere bei erhöhten Temperaturen. Sie müssen deshalb sowohl während der Diazotierungs — als auch der Kupplungsreaktion bei Temperaturen unterhalb Raumtemperatur gehalten werden, um die Zersetzung zu verringern und die Bildung wasserunlöslicher Nebenprodukte zu verhindern, die das Azopigmentprodukt verunreinigen und dadurch dessen Farbtonreinheit verringern. Wenn die Diazokomponente und/oder die Kupplungskomponente in Wasser unlöslich oder nur schwerlöslich sind, kann ausserdem die Kupplungsreaktion langsam und unvollständig sein, was zu verringerten Pigmentausbeuten führt, insbesondere bei niedrigen Temperaturen. Dieses Problem wird bei Reaktionen zur Herstellung von hochmolekularen (> 700) Pigmenten besonders schwerwiegend. Ferner sind solche Pigmente manchmal schlecht kristallisiert und besitzen deshalb schlechte Lichtechtheit und thermische Beständigkeit, so dass sie einer Konditionierungsstufe, z. B. Umkristallisation durch Erhitzen und/oder Nachbehandlung mit einem organischen Lösungsmittel bedürfen.

Verschiedene Versuche wurden unternommen, um diese Nachteile auszuschalten und somit die Ausbeute und Qualität wässriger Azokupplungsreaktionen zu verbessern. Beispielsweise hat man dem Reaktionsgemisch als Hilfsmittel Netz- und Dispergiermittel sowie Schutzkolloide zugesetzt.

Diese Massnahmen sind jedoch häufig unbefriedigend, da die Zusatzstoffe eine nachteilige Wirkung auf die Anwendungseigenschaften des Pigments ausüben.

Man hat versucht, die oben erwähnten, mit der Verwendung wässriger Medien verbundenen Probleme dadurch zu lösen, dass man wasserfreie organische Lösungsmittel als Medien für die Diazotierungs- und Kupplungsreaktionen einsetzt.

In der britischen Patentschrift 1 366 598 ist ein Verfahren zur Herstellung von Azopigmenten beschrieben, bei dem ein primäres aromatisches Amin in einem hydrophoben organischen Lösungsmittel wie Chlorbenzol unter Bildung einer Diazolösung oder teilweisen -dispersion diazotiert und danach mit einer Lösung oder teilweisen Dispersion der Kupplungskomponente zur Kupplungsreaktion zusammengebracht wird.

In der britischen Patentschrift 1 240 412 werden metallfreie Azopigmente, die ferner frei von Sulfonsäuregruppen sind, durch Diazotierung und Kupplung in einem mit Wasser nicht mischbaren organischen Lösungsmittel hergestellt. Gegebenenfalls erhitzt man die so erhaltenen Pigmente in hochsiedenden Lösungsmitteln. Die Diazotierungsstufe wird ohne Isolierung der Diazoverbindung und die Kupplungsreaktion in heterogener Phase durchgeführt, sodass die Diazo- und/oder Kupplungskomponenten in Suspension in höchstens 10 % Wasser enthaltenden organischen Lösungsmitteln vorliegen.

Die Verwendung eines wasserfreien organischen Lösungsmittels zur Herstellung von vielfach hochmolekularen und im übrigen schwer herzustellenden, metallfreien Azoverbindungen ist in der britischen Patentschrift 1 322 705 beschrieben. Dabei gibt man einen Ester der salpetrigen Säure vorzugsweise bei 20-50 °C zu einem wasserfreien Reaktionsgemisch, das aus (a) einem diazotierbaren Amin, (b) einer Kupplungskomponente, (c) einer organischen Säure mit $pK_a$ unter 3,0 und (d) einem oder mehreren organischen wasserunlöslichen Lösungsmitteln mit einer Dielektrizitätskonstante unter 15 besteht, wobei das Molverhältnis (c)/(a) weniger als 1 beträgt. Das anfallende Produkt wird gewonnen, indem man das Lösungsmittel teilweise abdestilliert und dann filtriert und mit Lösungsmittel wäscht.

Solche nicht-wässrigen Verfahren besitzen zwar gewisse Vorteile gegenüber wässrigen Verfahren, z. B. glatte Diazotierung primärer aromatischer Amine, höhere Beständigkeit der Diazoniumsalze im hydrophoben organischen Lösungsmittel, glatte Kupplungsreaktion und leichtere Durchführung von Nachbehandlungen, doch sind die bekannten nichtwässrigen Verfahren in verschiedener Hinsicht nachteilig. Dabei handelt es sich vor allem um die erforderliche grosse Menge Lösungsmittel, um den bei den typischerweise angewandten Schnellrührmethoden für eine schnelle und vollständige Umsetzung notwendigen innigen Vermischungsgrad aufrechtzuerhalten. Der im Vergleich zu Wasser hohe Preis organischer Lösungsmittel macht für ein wirtschaftliches Verfahren eine Lösungsmittelrückgewinnung notwendig. Dies erfolgt im allgemeinen entweder durch Destillation, die energie-intensiv ist, oder durch Filtrieren. Die zur Destillation erforderliche Temperatur kann bei gewissen niedermolekularen Azopigmenten einen unerwünschten Kristallisationsgrad zur Folge haben, der zu minderen anwendungstechnischen Leistungen führt. Zudem weisen gewisse niedermolekulare Azopigmente auch eine merkliche Löslichkeit im organischen Lösungsmittel auf, was beim Filtrieren und Waschen zu einem Pigmentausbeuteverlust führt.

Bei gleichzeitigen Diazotierungs- und Kupplungsprozessen in organischen Lösungsmitteln sind katalytische Mengen einer Säurequelle (typischerweise 0,05-0,5 Mol/Mol diazotierbares Amin) für die

# 0 055 218

Diazotierungsstufe erforderlich. Diese kann zwar durch konzentrierte Mineralsäuren geliefert werden, doch wird bei typischen Verfahren, wie den in den britischen Patentschriften 1 240 412 und 1 332 705 offenbarten, eine organische Säure, wie Essigsäure, eingesetzt. Stärkere Säuren, wie Trichloressigsäure oder Trifluoressigsäure, werden in geringeren Mengen, typischerweise 0,05 bis 0,2 Mol pro Mol diazotierbares Amin, benötigt. Solche Säuren müssen in jedem Fall aus dem Pigmentprodukt entfernt werden, und dies stellt bei der Abtrennung des Pigmentproduktes aus dem Reaktionsgemisch eine weitere Erschwerung dar.

Schliesslich wird in der US-Patentschrift 1 462 613 ein Verfahren zur Herstellung von Azofarbstoffen in nicht-wässrigen Systemen beschrieben, wonach ein diazotierbares Amin und eine Kupplungskomponente, welche in einem säurehaltigen Oel oder einer Fettsäure, wie Oelsäure, gelöst sind, mit Nitrit umgesetzt werden. Dabei wird das Oel oder die Fettsäure gleichzeitig als Lösungsmittel und zur Erzeugung der salpetrigen Säure aus dem Nitrit für die Diazotierung verwendet. Ausserdem werden dieses Oel bzw. diese Säure aus dem Reaktionsgemisch nicht abgetrennt, da sie für die spätere Applikation das geeignete Applikationsmedium darstellen.

Es wurde nun ein Weg gefunden, auf dem man die mit nicht-wässrigen Verfahren verbundenen Nachteile vermeiden kann.

Gegenstand vorliegender Erfindung ist ein Verfahren zur Herstellung von Azoverbindungen, welches dadurch gekennzeichnet ist, dass man (a) eine Lösung oder Dispersion eines diazotierbaren Amins unter Rühren mit einer Lösung oder Dispersion einer Kupplungskomponente und einer organischen oder anorganischen Nitritverbindung in einer wasserunlöslichen flüssigen linearen, verzweigten oder substituierten $C_4$-$C_{10}$-Alkan- und Cycloalkansäure, oder eine alkylierte Benzoesäure, gegebenenfalls in Gegenwart einer zweiten organischen Säure mit einem $pK_a$ unter 3,0 als Katalysator, zusammenbringt, (b) gegebenenfalls das so entstandene Reaktionsgemisch wirksamen Mahlkräften unterwirft, (c) eine wässrige Base zusetzt, um die organische Säure als ihr lösliches Salz in die wässrige Phase zu überführen, (d) die Azoverbindung isoliert, vorzugsweise durch Filtrieren, Waschen mit Wasser und Trocknen, und (e) gegebenenfalls die freie organische Säure zur Wiederverwendung in Stufe (a) regeneriert, vorzugsweise durch Zusatz von Mineralsäure und nachfolgende Abtrennung, z. B. mittels Schwerkraft oder Zentrifugieren.

Die organische Säure erfüllt zwei Funktionen, als Diazotiersäure und als organisches Lösungsmittel. Gegenüber vorbekannten Verfahren erfordert das erfindungsgemässe Verfahren erheblich weniger Lösungsmittel. Beispielsweise lässt sich das erfindungsgemässe Verfahren zweckmässig mit 100-500 Gew.-% Lösungsmittel bezogen auf das Azoprodukt durchführen, wogegen ältere Verfahren typischerweise 700-2 000 Gew.-% Lösungsmittel bezogen auf das Azoprodukt erfordern.

Das erfindungsgemässe Verfahren ist besonders wertvoll zur Herstellung von als Pigmente und Dispersionsfarbstoffe verwendbaren Azoverbindungen.

Pigmente, die zweckmässig in Verfahrensstufe (b) wirksamen Mahlkräften unterworfen werden, sind unter anderem solche, die im Reaktionsgemisch mit den oben erörterten, relativ niedrigen Konzentrationen an organischer Säure eine hohe Viskosität verursachen, sodass herkömmliches Rühren schlechte Vermischung ergeben würde. Ferner ist die Anwendung der Stufe (b) bei Pigmenten von Vorteil, die bei der Herstellung in einem Lösungsmittel eine zu hohe Teilchengrösse zur Verwendung als Pigmente aufweisen.

Als beim erfindungsgemässen Verfahren verwendbare Amine eignen sich diazotierbare, gegebenenfalls durch nicht-wasserlöslichmachende Gruppen wie Halogen-, Nitro-, Alkyl-, Alkoxy-, Cycloalkyl-, Aralkyl-, Alkaryl-, Aryl-, Amid- oder Sulfonamidgruppen substituierte Amine.

Als geeignete Amine seien beispielsweise genannt :

(A) Primäre aromatische Amine z. B. 2-, 3- und 4-Chloranilin, 2-, 3- und 4-Nitroanilin, 2,3-, 2,4-, 2,5- und 3,4-Dichloranilin, 2-Nitro-4-anisidin, 3-, 4- oder 5-Nitro-2-anisidin, 2-Chlor-4-nitroanilin, 2-Nitro-4-chloranilin, 2-Nitro-5-chloranilin, 2,5-Dimethoxyanilin, 2,4,6-Trimethylanilin, 4-Benzyloxyanilin, 4-Cyclohexylanilin, 2-Phenoxyanilin, 4-Phenylazoanilin, o-, m- oder p-Toluidin, 3-, 4-, 5- oder 6-Chlor-o-toluidin, 2,4-, 2,5-, 2,6- oder 3,5-Xylidin, 4- oder 5-Chlor-o-anisidin, o-, m- oder p-Phenetidin oder p-Amino-2,5-dimethoxybenzonitril ;

(B) mit Derivaten von Carboxyl- oder Sulfonsäuregruppen substituierte primäre aromatische Amine, z. B. 3- oder 4-Aminobenzanilid, 4-Aethoxy-3-aminobenzamid, 4-Chlor-3-aminobenzanilid, 4-Methyl-3-aminobenzoesäure-4'-chloranilid, 1-Amino-2,5-diäthoxybenzol-4-sulfanilid oder 1-Amino-2-methoxybenzol-4-sulfanilid ;

(C) heterocyclische Amine, z. B. 5-Amino-benzimidazolon, 7-Aminochinolon, 5-Amino-phthalimid und deren substituierte Derivate ;

(D) aromatische Diamine, z. B. 3,3'-Dimethyl-, 3,3'-Dichlor-, 3,3'-Dimethoxy- oder 3,3'-Diäthoxybenzidin, 3,3'-Dimethoxy-2,2'-dichlorbenzidin, 2,5,2',5'-Tetrachlorbenzidin, 1,5-Diaminonaphthalin oder 3,5'-Diaminobenzanilid.

Als beim erfindungsgemässen Verfahren verwendbare Kupplungskomponenten seien beispielsweise genannt : gegebenenfalls durch Gruppen wie Aryl-, Alkyl-, Arylalkyl-, Alkoxy-, Aryloxy-, Hydroxy-, Halogen- (z. B. Chlor oder Brom), Amid-, Imid-, Ester- oder Nitrogruppen einfach oder mehrfach

3

substituierte Acetesssigsäurearylamide oder Acetoacetarylamidderivate von gegebenenfalls in geeigneter Weise substituierten heterocyclischen aminhaltigen Verbindungen, wie solchen, die allgemein zur Herstellung von Azopigmenten und -dispersionsfarbstoffen eingesetzt werden.

Beispiele für solche Kupplungskomponenten sind Acetoacetylaminobenzol, 2-Acetoacetylaminotoluol, 4-Acetoacetylaminotoluol, 2-Acetoacetylaminoanisol, 4-Acetoacetylaminoanisol, 2-Acetoacetylaminophenetol, 4-Acetoacetylaminophenetol, 1-Acetoacetylamino-2,4-dimethylbenzol, 1-Acetoacetylamino-2,4-dimethoxybenzol, 1-Acetoacetylamino-2,5-dichlorbenzol, 1-Acetoacetylamino-2,5-dimethoxy-4-chlorbenzol, 5-Chlor-2-acetoacetylaminotoluol, 3-Chlor-4-acetoacetylaminotoluol, 1-Acetoacetylaminonaphthalin, 2-Acetoacetylaminonaphthalin und 5-Acetoacetylaminobenzimidazolon.

Weitere beim erfindungsgemässen Verfahren verwendbare Kupplungskomponenten sind unter anderem solche aus der Pyrazolonklasse, z. B. 1-Phenyl-3-methyl-5-pyrazolon, 1-(p-Tolyl)-3)-methyl-5-pyrazolon und 1-Phenyl-3-äthoxycarbonyl-5-pyrazolon und ferner Barbitursäuren.

Weitere geeignete Pyrazolonkupplungskomponenten sind unter anderem 1-Aryl-5-pyrazolone, wobei als Arylgruppe gegebenenfalls durch Gruppen wie z. B. Halogenatome oder $C_1$-$C_4$-Alkyl- oder -Alkoxygruppen einfach oder mehrfach substituiertes Phenyl vorliegt oder sich die Arylgruppe von 1-Aminonaphthalin oder 2-Aminonaphthalin ableitet.

Weiter eignen sich 1-Naphthol und 2-Naphthol sowie deren halogen- und carboxylsubstituierten Derivate als Kupplungskomponenten, insbesondere 3-Hydroxynaphthalin-2-carbanilid und dessen Derivate, wie 3-Hydroxynaphthalin-2-carbonsäure-2'-methylanilid.

Die für das erfindungsgemässe Verfahren geeigneten organischen Säurelösungsmittel sind im wesentlichen wasserunlöslich und stellen im angegebenen Temperaturbereich der Reaktion Flüssigkeiten dar. Es handelt sich dabei um lineare, verzweigte oder substituierte $C_4$-$C_{10}$-Alkan- und Cycloalkansäuren, worin die Alkylreste gegebenenfalls durch andere Atome, wie z. B. Sauerstoff, Stickstoff, Schwefel oder eine funktionelle Gruppe, wie z. B. eine Carbonyl- oder Sulfonylgruppe, unterbrochen sein können.

Ferner können die Säuren weitgehend wasserunlösliche substituierte aromatische Verbindungen sein, z. B. eine alkylierte Benzoesäure oder eine phenylsubstituierte aliphatische Säure. Auch kann das verwendete organische Säurelösungsmittel mehr als einen Säurerest enthalten, und in solchen Fällen können die Verbindungen Ester oder Derivate des organischen Säurelösungsmittels darstellen, die jedoch noch mindestens eine Säurefunktion enthalten, z. B. der Monomethylester der Adipinsäure.

Geradkettige und verzweigte $C_5$-$C_8$-Monocarbonsäuren, wie n-Pentansäure, n-Hexansäure, 2-Aethylhexansäure und Octansäure, werden als Säure bevorzugt. Auch kann man Gemische der angegebenen organischen Säuren einsetzen, insbesondere handelsübliche Gemische.

Wegen ihrer höheren Acidität geben niedermolekulare Säuren die höchsten Diazotierungs- und Kupplungsgeschwindigkeiten. Die zunehmende Wasserlöslichkeit unterhalb $C_4$ verringert jedoch die Säurerückgewinnung zur Wiederverwendung bis unter die wirtschaftlich tragbaren Grenzen.

Höhermolekulare aliphatische Säuren sind zunehmend wasserunlöslich, führen jedoch zu niedrigeren Reaktionsgeschwindigkeiten. Zudem sind Säuren wie Isononansäure und Decansäure teuer und können Emulgierung der Phasen bei der Säurerückgewinnung verursachen.

Basen die sich dazu eignen, das organische Säurelösungsmittel wasserlöslich zu machen, sind solche, die mit dem organischen Säurelösungsmittel reversibel ein wasserlöslichen Salz bilden können. Darunter werden Ammoniak, Natriumhydroxyd und Kaliumhydroxyd bevorzugt.

Als Diazotierungsreagenzien kann man Salpetrigsäureester, besonders solche von primären oder sekundären Alkoholen mit 1-8 Kohlenstoffatomen, einsetzen. Solche Ester sind beispielsweise die flüssigen Nitrite des Butyl-, Isobutyl-, Pentyl-, Isopentyl-, Heptyl- und Octylalkohols sowie Benzylalkohols, mit Siedepunkten über 50 °C. Die Ester können auch von Alkoholen mit 1-3 Kohlenstoffatomen abgeleitet sein, d. h. Methyl-, Aethyl-, Propyl- oder Isopropylester mit einem Siedepunkt unter 50 °C, die gasförmige oder sehr leichtflüchtige Flüssigkeiten darstellen. Auch lässt sich eine anorganische Nitritverbindung, wie Natriumnitrit, verwenden.

Das Nitrit kann dem Reaktionsgemisch im festen, flüssigen oder gasförmigen Zustand zugesetzt werden, doch gibt man Propyl-, Isopropyl- und Butylnitrit vorzugsweise in flüssiger Form oder im organischen Säurelösungsmittel gelöst dazu.

Für eine optimale Herstellung der reinen Azoverbindung ist es wünschenswert, dass die Geschwindigkeit des Nitritverbrauchs und der Bildung der Azoverbindung ungefähr gleich sind. Für diese Optimierung der Reaktionsbedingungen, wie Temperatur, Konzentration sowie Art und Menge des Katalysators, muss man Versuche anstellen. Es sei jedoch darauf hingewiesen, dass bei Azoverbindungen, die sich bei Raumtemperatur nur langsam bilden, ein Anstieg der Reaktionstemperatur die Zersetzung von Nitrit zu Stickstoffoxyden fördern kann, anstatt die Bildung der Azoverbindung zu beschleunigen. In solchen Fällen sollte man eine starke organische Säure als Katalysator bei relativ niedriger Temperatur einsetzen und die Geschwindigkeit des Nitritzusatzes verringern. Die Gegenwart überschüssigen Nitrits im Reaktionsgemisch zeigt sich durch Blaufärbung, wenn man eine Probe des Reaktionsgemischs auf ein mit 50 %-iger wässriger Salzsäurelösung imprägniertes Stärke/Kaliumjodidpapier aufbringt.

Als Beispiele für starke organische Säuren als Katalysatoren seien mono- und poly-$\alpha$-halogenierte aliphatische Carbonsäuren mit 2-6 Kohlenstoffatomen, wie $\alpha$-Chloressigsäure, $\alpha$-Chlorpropionsäure, $\alpha,\alpha$-Dichloressigsäure, $\alpha,\alpha,\alpha$-Trichloressigsäure, $\alpha,\alpha,\alpha$-Trifluoressigsäure und Perfluorbuttersäure, genannt.

Sulfonsäuren, wie Methansulfonsäure, Toluolsulfonsäure und Xylolsulfonsäure, sind ebenfalls verwendbar.

Die optimale Menge an Säure-Katalysator ist für jede Säure verschieden. Beispielsweise benötigt man 0,2-0,5 Mol von schwächeren Säuren wie, $\alpha$-Chloressigsäure, pro Mol diazotierbares Amin, wogegen sehr starke Säuren, wie Perfluorbuttersäure, schon in Mengen von nur 0,05-0,2 Mol pro Mol Amin wirksam sind.

Die Reaktionstemperatur kann zwischen — 20 °C und + 100 °C liegen, zweckmässig zwischen 10 °C und 50 °C.

Die Reaktion lässt sich in homogener oder heterogener Phase durchführen. Eine homogene Phase erhält man, wenn die Bestandteile des Reaktionsgemischs im organischen Säurelösungsmittel genügend löslich sind.

Die beste Reihenfolge, in der jeweils das Amin, die Kupplungskomponente, das Nitrit und das organische Säurelösungsmittel zur Herstellung einer gegebenen Azoverbindung zusammengebracht werden, lässt sich leicht durch Versuche feststellen. Im allgemeinen erweist sich vorheriges Mischen des Amins und der Kupplungskomponente im organischen Säurelösungsmittel mit nachfolgender Zugabe des Nitrits als am besten geeignet.

Die Bedingungen für innige Vermischung und Mahlung der Rohmaterialien und Produkte während der Reaktion lassen sich mittels einer Perlmühle, wie einer Dynomühle®, schaffen. Z-Schaufelmischer, Kugelmühlen und Mischer mit hoher Scherkraft sind ebenfalls verwendbar.

Die erfindungsgemässen Azoverbindungen können chargenweise oder kontinuierlich hergestellt werden. Bei einer bevorzugten Ausführungsform des erfindungsgemässen Verfahrens dispergiert man stöchiometrische Mengen diazotierbares Amin und Kupplungskomponente durch Schnellrühren in 250 Gew.-% (bezogen auf das Pigmentprodukt) einer aliphatischen $C_5$-$C_8$-Carbonsäure. Die Aufschlämmung wird in eine Dynomühle® gepumpt, der gleichzeitig ein zweiter, aus einer stöchiometrischen Menge eines $C_3$-$C_5$-Nitrits als Lösung in weiteren 100 Gew.-% (bezogen auf das Pigment) derselben organischen Säure bestehender Strom zugeführt wird. Während der Verweilzeit in der Mühle bildet sich das Azopigment in hoher Ausbeute.

Die Pigmentaufschlämmung wird kontinuierlich aus der Mühle ausgetragen und durch einen Rohrleitungsmischer geführt, in den wässrige Ammoniaklösung kontinuierlich eindosiert wird. Die Pigmentaufschlämmung wird bei pH 8-9 zu einer Filtriervorrichtung geleitet, gegebenenfalls über einen Zwischentank. Das Pigment wird mit Wasser gewaschen und getrocknet. Das Filtrat wird gesammelt, angesäuert und zur Wiederverwendung aufgetrennt.

Gewünschtenfalls kann man im Verfahren eine Wärmebehandlung einbeziehen, wobei man entweder zwischen der Mühle und dem Rohrleitungsmischer oder zwischen diesem und der Filtriervorrichtung einen Rohrleitungswärmeaustauscher einschaltet.

Das erfindungsgemässe Verfahren liefert Azoverbindungen in hoher Ausbeute und Reinheit nach einer leicht kontrollierbaren, gegebenenfalls kontinuierlichen Arbeitsweise. Die Bildung der Azoverbindung zusammen mit deren Konditionierung und Nachbehandlung kann gewünschtenfalls in einem einzigen Gefäss ohne Isolierung von Zwischenstufen durchgeführt werden.

Da zur Rückgewinnung des Säurelösungsmittels keine Erhitzung erforderlich ist, besteht keine Möglichkeit für Wärmeschädigung oder unerwünschtes Kristallwachstum von wärmeempfindlichen Azoverbindungen. Ferner wird durch die Umwandlung der Säure in ein wasserlösliches Salz bei der Wiedergewinnungsstufe sichergestellt, dass bei der Filtration keine Azoverbindung wegen Löslichkeit im Säurelösungsmittel verlorengeht.

Die Rückgewinnung des Säurelösungsmittels durch pH-Aenderung ist einfacher und technisch weniger aufwendig als bei den Verfahren des Standes der Technik. Ferner wirken sich die an sich niedrigen Rückgewinnungskosten für das Säurelösungsmittel, verglichen mit Destillation/Filtration, zusammen mit der kleineren Menge Säurelösungsmittel in erheblichen Ersparnissen an Rückgewinnungskosten aus. Die Rückgewinnungsraten für das Säurelösungsmittel sind hoch, typischerweise > 95 % des eingesetzten Säurelösungsmittels. Im Gegensatz zur Destillation, wo nicht-umgesetztes Amin sowie Kupplungskomponente in der Azoverbindung zurückgehalten werden, was in der Filtrationsstufe Waschen mit Lösungsmittel zu deren Entfernung erfordert, zeigt sich beim vorliegenden Verfahren, dass nicht-umgesetztes Amin bzw. Kupplungskomponente unter den vor dem Filtrieren herrschenden wässrig/alkalischen Bedingungen weitgehend entfernt wird.

Diese Beobachtung ist umso überraschender, als zu erwarten wäre, dass nur relativ niedermolekulare Kupplungskomponenten durch wässrige Basen entfernbar wären. Dagegen findet man nicht-umgesetzte Spuren gewisser niedermolekularer Amine im zurückgewonnenen freien Säurelösungsmittel. In solchen Fällen wird das Amin sehr zweckmässigerweise mit dem Säurelösungsmittel zurückgeführt, was gleichzeitig erhöhte Ausbeute an Azoverbindungen aus der Reaktion und verringerte Verschmutzungsprobleme durch die Abwässer des Säurerückgewinnungsverfahrens bewirkt.

Das erfindungsgemässe Verfahren ermöglicht verschiedene Nachbehandlungen, die nach herkömmlichen wässrigen Kupplungen nicht ohne weiteres durchführbar sind, beispielsweise (a) eine thermische Behandlung über 100 °C zur Verbesserung der Deckkraft und Lichtechtheit der Pigmente sowie (b) Einarbeitung von Polymeren, Harzen und Pigmentzusätzen, die in wässrigen Medien unlöslich sind, mit dem Ziel, verbesserte Pigmentszusammensetzungen für bestimmte Anwendungsmedien zu erzeugen.

Als Beispiele für solche Polymere, Harze und Zusätze seien die basischen Pigmentderivate der britischen Patentschrift Nr. 1 486 117 genannt. Andere geeignete Zusätze sind die in der britischen Patentschrift Nr. 1 589 159 beschriebenen, einschliesslich Carbonsäureester und -amide, wie Glycerintristearat, Dicyclohexylphthalat und Oleamid, Harze, wie Kohlenwasserstoffharze, sowie wasserunlösliche Fettalkohole, wie Cetylalkohol. Ebenfalls kann man Kolophonium und dessen Derivate, wie hydriertes Kolophonium, einsetzen.

Eine vorteilhafte Ausführungsform der Erfindung besteht darin, dass man gewisse Kupplungskomponenten, zum Beispiel solche der Pyrazolon- und Acetoacetarylamidklassen, im organischen Säurelösungsmittel durch Umsetzung von Diketen mit dem entsprechenden Amin vor der Zugabe des diazotierbaren Amins herstellen kann.

Eine weitere vorteilhafte Ausführungsform des erfindungsgemässen Verfahrens, welche mit vorbekannten Kupplungsverfahren in einem Lösungsmittel nicht durchführbar ist, besteht in der Herstellung von staubfreien, rieselfähigen, perlförmigen Pigmenten, wie in der britischen Patentschrift 1 589 159 beschrieben.

Die mit dem erfindungsgemässen Verfahren hergestellten Pigmente besitzen Eigenschaften, die bei der Einarbeitung in verschiedene Anwendungsmedien denen ähnlicher, nach bekannten Verfahren hergestellter Pigmente gleichkommen. Solche Medien sind unter anderem Anstrichmittel, Kunststoffe und insbesondere Druckfarben, z. B. flüssige Farben oder Verpackungsfarben, wie solche auf Grundlage von Nitrocellulose oder Polyamidharzen, Kunsttiefdruckfarben sowie Oeldruckfarben für Lithographie- oder Hochdruckanwendungen.

Die nachfolgenden Beispiele erläutern die Erfindung.

## Beispiel 1

Man beschickt ein mit einem Schaufelrührer ausgerüstetes Glasgefäss von 1/2 Liter Inhalt mit senkrechten Seiten und einem halbkugelförmigen Boden mit 400 g Glasperlen von 2-3 mm Durchmesser, 100 ml 2-Aethylhexansäure, 16,8 g p-Nitro-o-anisidin und 22,0 g Acetoacet-o-anisidid.

Unter Rühren bei 600 U.p.M. wird das Gemisch 10 Minuten lang dispergiert, wobei es eine Temperatur von 23 °C erreicht. Unter fortgesetztem Rühren gibt man im Verlauf von 5 Minuten 7,08 g trockenes Natriumnitrit dazu.

Die Pigmentbildung setzt sofort ein, wie aus einer Zunahme sowohl der Temperatur als auch der Viskosität ersichtlich ist. Nach 10 Minuten lässt man weitere 50 ml 2-Aethylhexansäure innerhalb von 5 Minuten einlaufen, um die Viskosität zu verringern und eine wirksamere Mahlung zu fördern. Dabei wird etwa 20 Minuten nach dem Ende der Natriumnitritzugabe eine Höchsttemperatur von 35 °C erreicht.

Man lässt die Reaktion noch 40 Minuten weiterlaufen und trägt dann den Gefässinhalt, nunmehr bei 29,5 °C, unter Rühren in eine Lösung von 90 g konzentriertem (d = 0,88) wässrigem Ammoniak in 1 000 ml 45 °C warmem Wasser ein.

Die Aufschlämmung wird 30 Minuten lang gerührt, wobei man den pH wenn nötig durch weitere Zugabe von wässrigem Ammoniak auf 8,5-9 hält.

Die Glasperlen werden auf einem groben Nylonsieb abgetrennt. Das Produkt, C. I. Pigmentgelb 74, wird durch Filtrieren, Waschen zunächst mit verdünnter wässriger Base und dann mit Wasser, und Trocknen bei 55-60 °C gewonnen. Die Ausbeute beträgt 35,4 g = 91,7 % der Theorie.

Wird bei diesem Beispiel die Reaktionszeit auf 3 Stunden erhöht, so steigt die Ausbeute auf 98,4 % der Theorie.

Das basische Filtrat aus diesem Beispiel wird mit wässriger Salzsäure auf pH 4 angesäuert. Nach 2 Stunden Stehen bei Raumtemperatur trennt sich die regenerierte 2-Aethylhexansäure von der wässrigen Phase und wird in einer Ausbeute von 144,7 ml (= 96,5 % des Einsatzes) zurückgewonnen. Dieses Material ist zur Wiederverwendung im erfindungsgemässen Verfahren geeignet.

## Beispiel 2

Man beschickt ein 1/2 Liter-Glasgefäss mit 200 g Glasperlen von 2-3 mm Durchmesser, 100 ml 2-Aethylhexansäure, 9,36 g 2-Methoxy-5-diäthylaminosulfonyl-anilin und 13,55 g 2-Hydroxy-3-(2',4'-dimethoxy-5'-chlor)-naphthanilid.

Man rührt eine Stunde bei 600 U.p.M. und gibt unter fortgesetztem Rühren 3,0 g Natriumnitrit dazu. Die nach einer weiteren Stunde gebildete dicke Pigmentaufschlämmung wird mit einer Lösung von 30 ml konzentrierter Ammoniaklösung in 200 ml Wasser verdünnt, 15 Minuten gerührt, und die Glasperlen werden abgetrennt. Man erhitzt die Pigmentaufschlämmung auf 70 °C durch Einleiten von Frischdampf, filtriert, wäscht mit Wasser und trocknet bei 55 °C. Dies liefert 21,4 g (94,3 % der Theorie) C. I. Pigmentrot 5 mit ausgezeichneter Farbstärke, Glanz und Reinheit bei Einarbeitung in ein Alkyd/Melamin-Anstrichbindemittel.

## Beispiel 3

Man beschickt eine entlüftete, 250 g Steatitkugeln von 0,9 mm Durchmesser enthaltende 1/4 Liter-Kugelmühle mit 8,4 g p-Nitro-o-anisidin, 10,56 g Acetoacet-o-anisidid, 0,47 g α-Chloressigsäure und 100 ml 2-Aethylhexansäure und mahlt 1 Stunde lang. (Nach 45 Minuten setzt man weitere 20 ml 2-Aethylhexansäure zu, um übermässiger Verdickung des Gemischs entgegenzuwirken). Nach Zugabe von 3,52 g trockenem Natriumnitrit wird im ganzen 10 Stunden lang weitergemahlen, wobei ein gegebenenfalls entstandener geringer Ueberdruck wenn nötig entspannt wird.

Während dieses Zeitraums gibt man weitere 0,1 g Natriumnitrit dazu, wenn eine Tüpfelprobe des Reaktionsgemischs auf mit Salzsäure befeuchtetem Stärke/Kaliumjodidpapier keine Blaufärbung erzeugt.

Das so gebildete Pigment wird durch Austragen des Kugelmühleninhalts in 500 ml 40 °C warmes, 90 ml konzentrierte Ammoniaklösung enthaltendes Wasser isoliert. Man steigert die Temperatur mit Frischdampf auf 70 °C, filtriert das Produkt aus den schwachgelben Flüssigkeiten ab und wäscht mit 1 Liter 70 °C warmem Wasser, dann mit einer Lösung von 1 g Natriumhydroxyd in 1 Liter 70 °C warmem Wasser und schliesslich mit 3 Litern ebenfalls 70 °C warmem Wasser. Nach Trocknen bei 55 °C erhält man als Produkt 19,25 g (99,7 % der Theorie) C. I. Pigmentgelb 74 mit weichem Gefüge.

## Beispiel 4

Man beschickt einen 1/2 Liter-Glasmahltopf mit 200 g 2-3 mm-Glasperlen, 6,32 g 3,3'-Dichlorbenzidin, 10,76 g Acetoacetmetaxylidid und 50 ml 2-Aethylhexansäure.

Man rührt das Gemisch 2 Stunden bei 600 U.p.M. und versetzt dann mit 3,62 g trockenem Natriumnitrit. Bei weiterem Rühren setzt die Pigmentbildung ein. Nach 15 Minuten gibt man 25 ml 2-Aethylhexansäure dazu und mahlt noch 3 3/4 Stunden weiter.

Man lässt eine Lösung von 31 g konzentrierter Ammoniaklösung in 120 ml Wasser einlaufen und rührt 30 Minuten. Man trennt die Glasperlen durch Filtrieren ab und verdünnt die Aufschlämmung mit Wasser auf 500 ml, bevor diese selbst filtriert und mit warmem Wasser gewaschen wird.

Der so erhaltene Presskuchen aus C. I. Pigmentgelb 13 wird erneut in 900 ml warmem Wasser mit Hilfe eines Silverson®-Rührers suspendiert. Unter Rühren mit einem Schaufelrührer gibt man 0,226 g eines durch Kuppeln von Benzidin-3,3'-disulfonsäure mit Acetoacet-metaxylidid hergestellten Farbstoffs als Lösung in 50 ml heissem Wasser dazu. Danach werden 8,79 g hydriertes Kolophonium in Form einer 5 %-igen wässrigen Lösung des Kaliumsalzes innerhalb von 5 Minuten dazugegeben.

Man erhöht die Temperatur der Aufschlämmung innerhalb von 15 Minuten auf 90-95 °C und erniedrigt den pH mit verdünnter Salzsäurelösung innerhalb von 10 Minuten auf 5,0. Man hält noch 10 Minuten auf 90-95 °C und erniedrigt die Temperatur dann durch Zugabe von kaltem Wasser auf 70 °C. Die Pigmentzusammensetzung wird durch Filtrieren, Waschen mit warmem Wasser und Trocknen bei 55 °C in einer Ausbeute von 25,3 g (95 % der Theorie) gewonnen. Das so erhaltene Produkt besitzt ausgezeichnete Dispergierbarkeit in Oeldruckfarbenmedien.

## Beispiel 5

Man verrührt 200 g 2-3 mm Glasperlen, 8,4 g p-Nitro-o-anisidin, 11,6 g Acetoacet-o-chloranilidid und 50 ml 2-Aethylhexansäure 1 Stunde bei 25 °C in einem 1/2 Liter-Mahltopf.

Bei Zugabe von 4,14 g Natriumnitrit unter fortgesetztem Rühren schlägt die Aufschlämmung schnell nach gelb um, und ihre Viskosität nimmt zu, sodass man nach 5 Minuten weitere 42 ml 2-Aethylhexansäure zusetzen muss, damit das Gemisch fliessfähig bleibt. Nach Erreichen einer Höchsttemperatur von 37,5 °C nach 16 Minuten fällt die Temperatur nach 30 Minuten Umsetzung auf 36 °C. Zu diesem Zeitpunkt lässt man 60 g konzentrierte, mit Wasser auf 200 ml verdünnte Ammoniaklösung einlaufen, rührt 10 Minuten und trennt die Glasperlen ab. Das Volumen wird bei pH 9,5 und 40 °C auf 700 ml verdünnt und das Pigmentprodukt abfiltriert, gewaschen und erneut in 1 000 ml 40 °C warmem Wasser suspendiert.

Unter Rühren gibt man 21 g Carboset® XL11, ein Acrylharz, in Form einer wässrigen Dispersion mit 30 % Feststoffgehalt innerhalb von 10 Minuten dazu, während man gleichzeitig den pH durch Zugabe verdünnter Natronlauge auf 10 hält. Man rührt die Aufschlämmung 5 Minuten und fällt das Harz durch Erniedrigung des pH auf 4,5 mit 1m-Salzsäurelösung innerhalb von 20 Minuten aus. Die Pigmentzusammensetzung von grobem Gefüge lässt sich leicht durch Filtrieren, Waschen und schliesslich Trocknen im Vakuum bei 55 °C isolieren. Das in einer Ausbeute von 38,1 g (90,7 % der Theorie) erhaltene Produkt lässt sich durch Schnellrühren in einem 30 % Aethanol enthaltenden alkalischen wässrigen Druckfarbenmedium dispergieren.

## Beispiel 6

250 g Steatitkugeln von 0,9 mm Durchmesser, 6,32 g 3,3'-Dichlorbenzidin, 10,56 g Acetoacet-o-anisidid, 100 ml 2-Aethylhexansäure und 0,47 g α-Chloressigsäure werden 1 Stunde in einer entlüfteten 1/4 Liter-Kugelmühle miteinander vermahlen. Man gibt 3,52 g trocknes Natriumnitrit dazu und mahlt weitere 6 Stunden unter gelegentlicher Entlüftung des Inhalts. Nach 30 Minuten müssen weitere 20 ml 2-Aethylhexansäure zugesetzt werden, um eine befriedigende Viskosität zum Mahlen aufrechtzuerhalten.

**0 055 218**

Nach dem Aufarbeiten wie oben in wässriger Ammoniaklösung erhält man 15,92 g (92,5 % der Theorie) C. I. Pigmentgelb 17.

### Beispiel 7

9,1 g 2,4,5-Trichloranilin, 13,5 g 3-Hydroxy-2'-methylnaphthanilid und 100 ml 2-Aethylhexansäure werden wie in Beispiel 2 vorgemischt. Man gibt 4,1 g trockenes Natriumnitrit und 5 Minuten später noch 20 ml 2-Aethylhexansäure dazu. Nach 1 1/2 Stunden weiterem Rühren wird das Pigmentprodukt wie zuvor mit Hilfe einer wässrigen Ammoniaklösung gewonnen. Man erhält 21,1 g C. I. Pigmentrot 112 mit einer Ausbeute von 94,2 % der Theorie.

### Beispiel 8

Man verrührt 9,95 g p-Chlor-o-nitroanilin, 12,35 g Acetoacet-o-chloranilid, 130 ml 2-Aethylhexansäure und 2,5 g α-Chloressigsäure 5 Minuten mittels eines Silverson®-Schnellrührers. Mittels Aussenkühlung wird die Temperatur des Gemisches auf 5 °C erniedrigt. Unter weiterem schnellem Rühren gibt man 4,03 g trockenes Natriumnitrit dazu und kühlt so, dass die Temperatur des Gemisches nicht über 45 °C steigt. Nach 30 Minuten isoliert man wie zuvor C. I. Pigmentgelb 3 in einer Ausbeute von 16,92 g (74,3 % der Theorie).

### Beispiel 9

4,2 g p-Nitro-o-anisidin, 6,1 g 5-Acetoacetylaminobenzimidazolon und 70 ml 2-Aethylbuttersäure werden 55 Minuten bei 600 U.p.M. in einem 200 g Glasperlen von 1-2 mm Durchmesser enthaltenden 1/2 Liter-Glasmahltopf gerührt. Man gibt 0,58 g α-Chloressigsäure und 5 Minuten später dann 1,81 g trockenes Natriumnitrit dazu. Unter fortgesetztem Rühren steigt die Temperatur innerhalb von 5 Minuten von 18,5 °C auf 25 °C, wobei dann 30 ml 2-Aethylbuttersäure und 0,2 g Natriumnitrit zugesetzt werden. 16 Minuten nach der ersten Natriumnitritzugabe erreicht die Temperatur einen Höchstwert von 28 °C. Danach fallen sowohl die Temperatur als auch die Viskosität während den verbleibenden 45 Minuten Reaktionszeit.

Das Reaktionsgemisch wird in 500 ml Wasser ausgetragen und der pH durch Zusatz konzentrierter wässriger Ammoniaklösung auf 8,0 erhöht und dort gehalten. Man rührt die Aufschlämmung 30 Minuten, erhöht die Temperatur durch Einleiten von Dampf auf 95 °C, hält 5 Minuten bei 95 °C und lässt auf 70 °C abkühlen. Nach Einstellung des pH auf 8,7 wird das orangefarbige Pigmentprodukt abfiltriert, mit 3 Litern 95 °C warmem Wasser gewaschen und bei 55 °C getrocknet. Die Ausbeute beträgt 7,38 g (71,6 %).

### Beispiel 10

Nach der Arbeitsweise von Beispiel 9 werden 7,45 g 5-Aminobenzimidazolon, 6,72 g Barbitursäure, 50 ml 2-Aethylbuttersäure und 1,17 g α-Chloressigsäure miteinander vermahlen, wobei man nach 30 Minuten weitere 50 ml 2-Aethylbuttersäure dazugibt. Bei einer Temperatur von 20 °C werden 3,0 g Natriumnitrit und später 0,62 g bzw. 0,3 g nach 5 bzw. 20 Minuten eingetragen. Eine Höchsttemperatur von 31 °C wird nach 12 Minuten erreicht. Nach zwei Stunden, bei einer Temperatur von 23 °C, lässt man konzentrierte (d = 0,88), mit dem doppelten Gewicht Wasser verdünnte Ammoniaklösung innerhalb von 30 Minuten einlaufen, um den pH auf 8,5 zu halten. Die Glasperlen werden durch Filtrieren entfernt und das Pigmentprodukt durch eine zweite Filtration sowie Waschen mit 85-90 °C warmem Wasser und Trocknen gewonnen. Man erhält ein orangefarbiges Pulver in 14,2 g (98,7 %) Ausbeute.

### Beispiel 11

400 g Glasperlen von 4 mm Durchmesser, 100 ml 2-Aethylhexansäure, 16,8 g p-Nitro-o-anisidin, 22,0 g Acetoacet-o-anisidid und 0,94 g α-Chloressigsäure werden in einem 700 ml Glasmahltopf miteinander vermahlen. Man rührt eine Lösung von 19,3 g Hercures A.80® (einem Kohlenwasserstoffharz von der Hercules Powder Co. Ltd.) in 100 ml 2-Aethylhexansäure und danach 7,08 g trockenes Natriumnitrit ein. Man mahlt das Gemisch 2 Stunden lang und gewinnt die C. I. Pigmentgelb-74-Zusammensetzung in 54,4 g Ausbeute (94 % der Theorie). Das Produkt besitzt gute Dispergierbarkeit sowie Glanz in Oeldruckfarben.

### Beispiel 12

In der Apparatur aus Beispiel 11 wird eine Vormischung hergestellt, indem man 12,64 g 3,3'-Dichlorbenzidin, 21,12 g Acetoacet-o-anisidid und 100 ml 2-Aethylhexansäure 1 Stunde miteinander vermahlt.

Inzwischen löst man 1,88 g α-Chloressigsäure in 200 ml 2-Aethylhexansäure. Unter Rühren versetzt man mit 15,1 g n-Butanol und 14,08 g trockenem Natriumnitrit und erhöht die Temperatur innerhalb von 45 Minuten auf 30 °C. 100 ml dieser Butylnitrit enthaltenden Lösung werden unter Rühren der

8

Vormischung zugesetzt. Während eines Zeitraums von 2 Stunden gibt man weitere Mengen Butylnitritlösung zu, um einen geringen Ueberschuss Nitrit aufrechtzuerhalten, was durch einen schwachblauen Flecken auf mit Mineralsäure befeuchtetem Stärke/Kaliumjodidpapier angezeigt werden kann.

Die so erhaltene Pigmentaufschlämmung trennt man von den Glasperlen ab und hält sie 2 Stunden in einem Oelbad bei 120 °C. Anschliessend wird die Aufschlämmung abgekühlt und C. I. Pigmentgelb 17 als Produkt isoliert.

Das Produkt aus diesem Beispiel ist schwächer und röter, aber erheblich stärker deckend als ein entsprechendes, entweder durch herkömmliche wässrige Kupplung oder nach der Methode dieses Beispiels unter Weglassung der Hitzebehandlung hergestelltes Pigment.

### Beispiel 13

Man verrührt 8,62 g p-Chlor-o-nitroanilin, 10,89 g Acetoacet-o-chloranilid, 2,36 g α-Chloressigsäure und 50 ml 2-Aethylhexansäure 1 Stunde bei 600 U.p.M. in einem 200 g Glasperlen von 2-3 mm Durchmesser enthaltenden 1/2 Liter-Mahltopf. Die Temperatur steigt bis auf 26 °C. Man gibt 4,14 g Natriumnitrit dazu und rührt weiter. Beim Einsetzen der Pigmentbildung und beim Anstieg der Mahlviskosität gibt man nach 2 und 5 Minuten 25 ml-Portionen 2-Aethylhexansäure dazu. Innert 16 Minuten steigt die Temperatur bis auf 36 °C und nach 1 Stunde bei einer Temperatur von 32 °C gibt man wässrige Ammoniaklösung dazu und filtriert das Pigmentprodukt, welches gut mit heissem Wasser gewaschen wird. Das in einer Ausbeute von 17,84 g (90,3 % der Theorie) erhaltene C. I. Pigmentgelb 3 ist beim Dispergieren in einem Alkyd-Innenanstrichsystem etwa 20 % stärker und etwas röter als ein entsprechendes, durch herkömmliche wässrige Kupplung hergestelltes Produkt.

Aehnliche Ergebnisse erhält man, wenn die α-Chloressigsäure dieses Beispiels durch 2,45 g Trichloressigsäure ersetzt wird. Bei Verwendung von 1,9 g p-Toluolsulfonsäure als Katalysator erhält man eine verringerte Ausbeute von 68,9 %.

### Beispiel 14

Man verfährt wie in Beispiel 13 unter Ersatz der 2-Aethylhexansäure durch Isononansäure. Das Pigmentprodukt wird in 14,14 g Ausbeute (71,6 % der Theorie) gewonnen.

### Beispiel 15

Gemäss der Arbeitsweise von Beispiel 13 setzt man 7,6 g m-Nitro-p-toluidin und 9,0 g Acetoacetanilid mit 4,5 g Natriumnitrit um und erhält C. I. Pigmentgelb in 96 % Ausbeute.

### Beispiele 16-20

Gemäss der Arbeitsweise von Beispiel 13 setzt man 8,4 g p-Nitro-o-anisidin mit 3,5 g Natriumnitrit und den Kupplungskomponenten in Tabelle 1 in 4 % stöchiometrischem Ueberschuss (bezogen auf p-Nitro-o-anisidin) in einem 0,94 g α-Chloressigsäure als Katalysator enthaltenden 2-Aethylhexansäuremedium um. Die erhaltenen Produkte und deren Ausbeuten sind ebenfalls in Tabelle 1 angegeben.

### Beispiele 21 und 22

Man verfährt wie in Beispiel 13 unter Ersatz des dort verwendeten Acetoacet-o-chloranilids durch eine äquivalente stöchiometrische Menge in der Tabelle 1 angeführten Kupplungskomponente. Die erhaltenen Produkte und deren Ausbeuten sind ebenfalls in Tabelle 1 angegeben.

(Siehe Tabelle 1, Seite 10 f.)

Tabelle 1

| BEISPIEL | KUPPLUNGSKOMPONENTE | 2-AETHYL-HEXANSÄU-RE INSGE-SAMT (ml) | PRODUKT | AUSBEUTE (%) |
|---|---|---|---|---|
| 16 | 1-Acetoacetylaminoanthra-chinon | 220 ml | rötlich gelb | 99,1 |
| 17 | 5-(3'-Methyl-5'-pyrazolonyl-1')-benzimidazolon | 120 ml | orange | 81,1 |
| 18 | Acetoacetyl-p-hydroxyanilid | 100 ml | orangerot | 84,0 |
| 19 | Bis-acetoacet-p-phenylendi-amin | 100 ml | orange | 94,9 |
| 20 | Bis-acetoacet-1,2-äthylen-diamin | 100 ml | grünlich gelb | 94,8 |
| 21 | Acetoacet-5-chlor-o-toluidid | 100 ml | stark neutralgelb | 93,5 |
| 22 | Acetoacet-2,3-dichloranilid | 140 ml | rötlich gelb | 92,1 |

### Beispiel 23

Man rührt 12,3 g o-Anisidin in 100 ml 2-Aethylhexansäure ein und lässt innerhalb von 10 Minuten 8,4 ml Diketen einlaufen. Durch Aussenheizung wird die Temperatur auf 100 °C erhöht und 5 Stunden gehalten. Nach Abkühlen versetzt man die Lösung unter Rühren mit einem schnell-laufenden Sägezahnrührer mit 16,78 g p-Nitro-o-anisidin und 0,62 g Acetoacet-2-aminopyridin.

Nach 15 Minuten gibt man Isobutylnitrit in der erforderlichen Menge dazu, um einen geringen Ueberschuss Nitrit beizubehalten, wie an angesäuertem Jodstärkepapier angezeigt werden kann. Zur Förderung der Fliessfähigkeit gibt man nach 30 Minuten weitere 100 ml 2-Aethylhexansäure dazu. Nach einer Gesamtreaktionszeit von 1 Stunde wird wässriger Ammoniak zugesetzt und das Pigmentprodukt abfiltriert, mit heissem Wasser gewaschen und bei 55 °C getrocknet. Man erhält eine farbstarke, sehr durchscheinende C. I. Pigmentgelb-74-Zusammensetzung in 69 % Ausbeute.

### Beispiel 24

In einem 1/2 Liter-Glastopf mit halbkugelförmigem Boden rührt man ein Gemisch aus 6,32 g 3,3'-Dichlorbenzidin, 10,56 g Acetoacet-o-anisidin und 50 ml 2-Aethylhexansäure 1 Stunde bei 800 U.p.M. mittels eines Sägezahnrührers. Inzwischen löst man in einem zweiten Gefäss 0,94 g α-Chloressigsäure unter Rühren in 100 ml 2-Aethylhexansäure. Man versetzt mit 7,55 g Isobutanol und 7,04 g Natriumnitrit und rührt 1 Stunde bei 25-30 °C. Man gibt so viel dieser Suspension zu dem Amin- und Kupplungskomponentengemisch, nunmehr unter Rühren bei 1 500 U.p.M., dass ein geringer Nitritüberschuss 4 Stunden lang bis zum Aufhören der Nitritaufnahme bestehen bleibt.

Mittels Aussenheizung erhöht man die Temperatur auf 105 °C und hält diese 30 Minuten. Die Pigmentaufschlämmung wird in 1 Liter Wasser ausgetragen, und der pH mit verdünnter wässriger Ammoniaklösung unter Rühren auf 9,0 erhöht. Man erhöht die Temperatur auf 95 °C, hält sie 30 Minuten und isoliert das C. I. Pigmentgelb 17 als Produkt in 77 % Ausbeute durch Filtrieren, Heisswaschen und Trocknen. Bei der Anwendung ist das Produkt aus diesem Beispiel erheblich mehr deckend als ein ähnliches, ohne 30 Minuten Nachbehandlung bei 105 °C hergestelltes Produkt.

### Beispiel 25

Man beschickt einen 1/2 Liter-Glasmahltopf mit 200 g 2-3 mm Glasperlen, 6,32 g 3,3'-Dichlorbenzidin, 10,76 g Acetoacet-metaxylidid und 70 ml n-Octansäure.

Man rührt 1 Stunde bei 600 U.p.M. und gibt dann portionsweise 3,75 g trockenes Natriumnitrit unter Aufrechterhaltung eines geringen Nitritüberschusses dazu. Die Reaktionszeit beträgt 3 Stunden, während deren man weitere 50 ml n-Octansäure zusetzt, um die Fliessfähigkeit zu erhalten.

Man löst 0,25 g eines durch Kupplung von Benzidin-3,3'-disulfonsäure mit Acetoacet-metaxylidid gebildeten Farbstoffs in 30 ml n-Octansäure. Man gibt 8,79 g hydriertes Kolophonium dazu und rührt bis zur Auflösung weiter. Das Gemisch wird der Pigmentaufschlämmung zugesetzt und 2 1/2 Stunden nachgerührt. Man trennt die Glasperlen ab und giesst die Aufschlämmung in 1 Liter 40 °C warmes Wasser, erhitzt auf 95 °C und lässt dann auf 70 °C abkühlen. Man versetzt mit wässriger Ammoniaklösung, um den pH auf 7,5 zu erhöhen. Nach 30 Minuten wird die C. I. Pigmentgelb-13-Zusammensetzung abfiltriert, mit heissem Wasser gewaschen und bei 60 °C getrocknet, was 23,2 g (88,7 % der Theorie) gelbes Pulver liefert.

### Beispiel 26

Das Amin und die Kupplungskomponente des vorangehenden Beispiels werden gemäss der Arbeitsweise von Beispiel 24 umgesetzt. Der Farbstoff und das Kolophonium des vorangehenden Beispiels, in 25 ml 2-Aethylhexansäure gelöst, werden dazugegeben und die Temperatur mittels eines Oelbads 5 Minuten lang auf 90 °C erhöht. Die so erhaltene Aufschlämmung gibt man in 1 Liter 40 °C warmes, 0,05 g Hydroxyäthylcellulose enthaltendes Wasser bei pH 5. Nach 1 Stunde erhöht man den pH innerhalb von 30 Minuten mit verdünnter wässriger Ammoniaklösung auf 7,5 und hält diesen noch 30 Minuten. Die so erhaltenen Pigmentperlen von ~ 1 mm Durchmesser werden durch Filtrieren, Waschen und Trocknen in einer Ausbeute von 80,5 % der Theorie isoliert.

### Beispiel 27 ·

Man rührt ein Gemisch aus 3 Liter 2-Aethylhexansäure, 504 g p-Nitro-o-anisidin, 660 g Acetoacet-o-anisidin und 12 g α-Chloressigsäure 15 Minuten lang mittels eines mit einem Desintegratorkopf versehenen Silverson®-Rührers. Die Aufschlämmung wird auf 25 °C gekühlt und kontinuierlich mit einer Geschwindigkeit von 15 ml/Minute in eine 1 Liter-Dyno®-Müle eingeführt. Gleichzeitig wird der Mühle eine Lösung von 304 g in 1,5 Liter 2-Aethylhexansäure gelöstem n-Butylnitrit mit einer solchen Geschwindigkeit zugeführt, dass ein geringer Nitritüberschuss bestehen bleibt. Die Mühle wird gekühlt, um

11

einen Anstieg der Temperatur über 37 °C zu verhindern. Das kontinuierlich aus der Mühle ausgetragene Pigmentprodukt wird durch ein Rührzwischengefäss von 1 Liter Inhalt und von dort in ein weiteres Gefäss geleitet, dem man kontinuierlich verdünnte wässrige Ammoniaklösung zusetzt, um einen pH von 9,0 einzustellen. Die aus diesem Gefäss ausgetragene C. I. Pigmentgelb-74-Aufschlämmung wird filtriert, gewaschen und getrocknet. Die Ausbeute beträgt 94,5 % der Theorie.

### Beispiel 28

400 g 2-Aethylhexansäure, 168 g p-Nitro-o-anisidin und 220 g Acetoacet-o-anisidid werden in einen Z-Schaufelmischer gegeben und unter Kühlung 40 Minuten innig vermischt. Dann versetzt man unter Kühlung um einen Anstieg der Temperatur über 35 °C zu verhindern, innerhalb von 30 Minuten mit 71 g Natriumnitrit. Nach 1 weiteren Stunde wird die C. I. Pigmentgelb-74-Phase ausgetragen und durch Behandeln mit verdünnter wässriger Natronlauge, Waschen und Trocknen bei 55 °C isoliert. Die Ausbeute beträgt 328 g (85 % der Theorie).

### Patentansprüche

1. Verfahren zur Herstellung von Azoverbindungen, dadurch gekennzeichnet, dass man eine Lösung oder Dispersion eines diazotierbaren Amins unter Rühren mit einer Lösung oder Dispersion einer Kupplungskomponente und einer organischen oder anorganischen Nitritverbindung in einer wasserunlöslichen flüssigen linearen, verzweigten oder substituierten $C_4$-$C_{10}$-Alkan- und Cycloalkansäure, oder eine alkylierte Benzoesäure, umsetzt, zum entstandenen Reaktionsgemisch eine wässrige Base zusetzt, um die organische Säure als ihr lösliches Salz in die wässrige Phase zu überführen, und die Azoverbindung isoliert.

2. Verfahren nach Anspruch 1, dadurch gekennzeichnet, dass man als diazotierbares Amin ein unsubstituiertes oder durch nicht-wasserlöslichmachende Gruppen substituiertes, primäres aromatisches Amin, ein durch Derivate von Carbon- oder Sulfonsäuregruppen substituiertes primäres aromatisches Amin, ein aromatisches Diamin oder ein heterocyclisches Amin verwendet.

3. Verfahren nach Anspruch 1, dadurch gekennzeichnet, dass man als Kupplungskomponente ein unsubstituiertes oder substituiertes Acetessigsäurearylamid, ein Acetoacetarylamidderivat einer unsubstituierten oder substituierten heterocyclischen aminhaltigen Verbindung, eine Pyrazolonkupplungskomponente, ein 1- oder 2-Naphthol, ein 3-Hydroxy-2-naphthanilid oder eine Barbitursäure verwendet.

4. Verfahren nach Anspruch 1, dadurch gekennzeichnet, dass man als organische Säure eine weitgehend wasserunlösliche, bei Diazotierungs- und Kupplungstemperaturen flüssige $C_4$-$C_{10}$-aliphatische Säure verwendet.

5. Verfahren nach Anspruch 1, dadurch gekennzeichnet, dass man als organische Säure eine aliphatische Monocarbonsäure mit 5 bis 8 Kohlenstoffatomen verwendet.

6. Verfahren nach Anspruch 1, dadurch gekennzeichnet, dass man die als Diazotiersäure und Lösungsmittel verwendete organische Säure in einer Menge von 100 bis 500 Gew.%, bezogen auf das Gewicht der Azoverbindung, einsetzt.

7. Verfahren nach Anspruch 1, dadurch gekennzeichnet, dass man als Diazotierungsreagenz einen Salpetrigsäureester oder ein anorganisches Nitrit verwendet.

8. Verfahren nach einem der vorhergehenden Ansprüche, dadurch gekennzeichnet, dass man bei Einsatz eines nur langsam oder schwer zu diazotierenden und zu kuppelnden Amins eine katalytische Menge einer starken organischen Säure, d. h. einer Säure mit $pK_a > 3,0$ zusetzt.

9. Verfahren nach Anspruch 8, dadurch gekennzeichnet, dass man als starke organische Säure eine mono- oder poly-α-halogenierte aliphatische Carbonsäure mit 2-6 Kohlenstoffatomen oder eine Sulfonsäure verwendet.

10. Verfahren nach Anspruch 8, dadurch gekennzeichnet, dass die Menge an Säure-Katalysator 0,05 -0,5 Mol pro Mol diazotierbares Amin beträgt.

11. Verfahren nach Anspruch 1, dadurch gekennzeichnet, dass man das Reaktionsgemisch wirksamen Mahlkräften unterwirft.

12. Verfahren nach Anspruch 1, dadurch gekennzeichnet, dass man als Base Ammoniak, Natriumhydroxid oder Kaliumhydroxid verwendet.

13. Verfahren nach Anspruch 1, dadurch gekennzeichnet, dass man die Umsetzung zwischen — 20 °C und + 100 °C durchführt.

### Claims

1. A process for the production of an azo compound, which process comprises reacting, with agitation, a solution or dispersion of a diazotisable amine with a solution or dispersion of a coupling component and an organic or inorganic nitrite compound, in a water insoluble liquid linear, branched or substituted $C_4$-$C_{10}$alkane or $C_4$-$C_{10}$cycloalkane acid, or an alkylated benzoic acid, adding to the

0 055 218

resultant reaction mixture an aqueous base to transfer the organic acid, as its soluble salt, into the aqueous phase, and isolating the azo compound.

2. A process according to claim 1, wherein the diazotisable amine used is a primary aromatic amine unsubstituted or substituted by non-water solubilising groups ; a primary aromatic amine substituted by derivatives of carboxylic or sulphonic acid groups ; or an aromatic diamine ; or a heterocyclic amine.

3. A process according to claim 1, wherein the coupling component used is an unsubstituted or substituted acetoacetic acid arylamide group ; an acetoacetarylamide derivative of an unsubstituted or substituted heterocyclic amine-containing compound ; a pyrazolone coupling component : a 1- or 2-naphthol ; a 3-hydroxy-2-naphthanilide or a barbituric acid.

4. A process according to claim 1, wherein the organic acid is a substantially water-insoluble $C_4$-$C_{10}$aliphatic acid which is liquid at diazotisation and coupling temperatures.

5. A process according to claim 1, wherein the organic acid is a $C_5$-$C_8$ aliphatic monocarboxylic acid.

6. A process according to claim 1, wherein the amount of organic acid used, as diazotising acid and solvent, is from 100 to 500 % by weight, based on the weight of azo compound.

7. A process according to claim 1, wherein the diazotising agent is a nitrous acid ester or inorganic nitrite.

8. A process according to any one of the preceding claims, which, when using an amine which is slow or difficult to diazotise and couple, comprises adding a catalytic amount of a strong organic acid. i. e. an acid of $pK_a > 3.0$.

9. A process according to claim 8, wherein the strong organic acid is a mono- or poly-$\alpha$-halogenated aliphatic carboxylic acid having 2-6 carbon atoms, or a sulphonic acid.

10. A process according to claim 8, wherein the amount of acid catalyst is from 0.05-0.5 mole per mole of diazotisable amine.

11. A process according to claim 1, wherein the reaction mixture is subjected to efficient grinding forces.

12. A process according to claim 1, wherein the base used is ammonia, sodium hydroxide or potassium hydroxide.

13. A process according to claim 1, wherein the reaction is carried out in the temperature range from — 20° to + 100 °C.

**Revendications**

1. Procédé pour préparer les composés azoïques, caractérisé en ce qu'on fait réagir une solution ou dispersion d'une amine diazotable, sous agitation, avec une solution ou dispersion d'un copulant et un nitrite organique ou minéral dans un acide alcanoïque et cycloalcanoïque en $C_4$ à $C_{10}$, linéaire, ramifié ou substitué, liquide et insoluble dans l'eau, ou dans un acide benzoïque alkylé, on ajoute au mélange réactionnel résultant d'une base aqueuse pour faire passer dans la phase aqueuse l'acide organique sous forme de son sel soluble, et l'on isole le composé azoïque.

2. Procédé selon la revendication 1, caractérisé en ce qu'on utilise comme amine diazotable une amine aromatique primaire non substituée ou substituée par des groupes ne provoquant pas de solubilisation dans l'eau, une amine aromatique primaire substituée par des dérivés des groupes acides carboxyliques ou acides sulfoniques, une diamine aromatique ou une amine hétérocyclique.

3. Procédé selon la revendication 1, caractérisé en ce qu'on utilise comme copulant un arylamide d'acide acétoacétique non substitué ou substitué, un acétoacétarylamide dérivé d'un composé hétérocyclique, non substitué ou substitué, contenant une fonction amine, un copulant de la classe des pyrazolones, un naphtol-1 ou -2, un hydroxy-3 naphtanilide-2 ou un acide barbiturique.

4. Procédé selon la revendication 1, caractérisé en ce qu'on utilise comme acide organique un acide aliphatique en $C_4$ à $C_{10}$, liquide aux températures de diazotation et de copulation et qui est dans une large mesure insoluble dans l'eau.

5. Procédé selon la revendication 1, caractérisé en ce qu'on utilise comme acide organique un acide monocarboxylique aliphatique ayant 5 à 8 atomes de carbone.

6. Procédé selon la revendication 1, caractérisé en ce qu'on utilise, en une quantité de 100 à 500 % en poids, par rapport au poids du composé azoïque, l'acide organique utilisé comme acide pour la diazotation et comme solvant.

7. Procédé selon la revendication 1, caractérisé en ce qu'on utilise comme corps pour la réaction de diazotation un ester d'acide nitreux ou un nitrite minéral.

8. Procédé selon l'une des revendications précédentes, caractérisé en ce que, en cas d'utilisation d'une amine qui ne réagit que lentement ou difficilement pour la diazotation et la copulation, on ajoute une quantité catalytique d'un acide organique fort, c'est-à-dire d'un acide dont le $pK_a$ est supérieur à 3,0.

9. Procédé selon la revendication 8, caractérisé en ce qu'on utilise comme acide organique fort un acide carboxylique aliphatique comportant 2 à 6 atomes de carbone, ou un acide sulfonique, mono ou poly halogéné en $\alpha$.

10. Procédé selon la revendication 8, caractérisé en ce que la quantité du catalyseur acide représente 0,05 à 0,5 mol par mol de l'amine diazotable.

13

11. Procédé selon la revendication 1, caractérisé en ce qu'on soumet le mélange réactionnel à d'intenses efforts de broyage.

12. Procédé selon la revendication 1, caractérisé en ce qu'on utilise comme base l'ammoniac, l'hydroxyde de sodium ou l'hydroxyde de potassium.

13. Procédé selon la revendication 1, caractérisé en ce que l'on conduit la réaction entre — 20 °C et + 100 °C.